# EUROPEAN PATENT APPLICATION

(11) **EP 4 752 874 A1**
(43) Date of publication of application: **03.06.2026**
(21) Application number: 24856682.0
(22) Date of filing: 30.07.2024
(51) Int. Cl.: G09G 3/32, G09G 3/20, G09G 5/10, G06F 3/14

(54) **ELECTRONIC DEVICE AND OPERATION METHOD THEREOF**

(30) Priority: 21.08.2023 KR 20230109122
(71) Applicant: Samsung Electronics Co., Ltd., Suwon-si, Gyeonggi-do 16677 (KR)
(72) Inventor: AHN, Taegyoung, Suwon-si, Gyeonggi-do 16677 (KR); KOO, Gangmo, Suwon-si, Gyeonggi-do 16677 (KR)
(74) Representative: Gulde & Partner
(86) International application number: PCT/KR2024/011073
(87) International publication number: WO 2025/042069

(57) **Abstract**

Provided is an electronic device including a display including a plurality of pixels, and a driver, wherein the driver is configured to obtain a first code value by converting an input code value, obtain a second code value by dithering the input code value, obtain a third code value based on the first code value and the second code value, and drive the display by applying a driving signal corresponding to the third code value to a pixel.

## Description

### Technical Field

Various embodiments described herein relate to an electronic device and an operation method of the electronic device, and more particularly, to an electronic device with improved uniformity between pixels of a display and an operation method of the electronic device.

### Background Art

A video wall device is a large screen including a plurality of panels and is also referred to as a multi-vision device. The video wall device is configured to use a plurality of display devices as an integrated display device.

The display device may include a plurality of panels, and each panel may include a set of modules. Each module may include a plurality of pixels, and each pixel may include a plurality of light emitting elements.

Because the display device includes a plurality of panels and each panel has a unique brightness and color, deviations in luminance and color may occur in each panel from the viewpoint of one display.

### Disclosure of Invention

### Solution to Problem

An electronic device according to an embodiment may include a display including a plurality of pixels and a driver.

In an embodiment, the driver may be configured to obtain a first code value by converting an input code value.

In an embodiment, the driver may be configured to obtain a second code value by dithering the input code value.

In an embodiment, the driver may be configured to obtain a third code value based on the first code value and the second code value.

In an embodiment, the driver may be configured to drive the display by applying a driving signal corresponding to the third code value to a pixel.

### Brief Description of Drawings

FIG. 1 illustrates a method of adjusting a deviation of each pixel by using a measurement camera.
FIG. 2 is a block diagram of a display device.
FIG. 3 illustrates a relationship between an input code value and a corrected code value.
FIG. 4 illustrates output brightness depending on an input code value at low grayscale.
FIG. 5 illustrates a case where a dithering technique is used to solve a correction error at low grayscale, according to an embodiment.
FIG. 6 illustrates dithering patterns depending on input code values.
FIG. 7 is a diagram particularly comparing and describing a method by which a display device of FIG. 5 processes unit areas 621 and 623 of FIG. 6.
FIG. 8 illustrates an electronic device according to an embodiment.
FIG. 9 illustrates an electronic device according to an embodiment outputting a desired brightness when a desired code value is 32.
FIG. 10 illustrates an electronic device according to an embodiment outputting a desired brightness when a desired code value is 8.
FIG. 11 illustrates an electronic device according to an embodiment outputting a desired brightness when a desired code value is 16.
FIG. 12 is a flowchart illustrating an operation method of an electronic device, according to an embodiment.
FIG. 13 is a flowchart illustrating an operation method of an electronic device, according to an embodiment.

### Mode for the Invention

An operation method of an electronic device according to an embodiment may include an operation of obtaining a first code value by converting an input code value.

In an embodiment, the operation method of the electronic device may include an operation of obtaining a second code value by dithering the input code value.

In an embodiment, the operation method of the electronic device may include an operation of obtaining a third code value based on the first code value and the second code value.

In an embodiment, the operation method of the electronic device may include an operation of driving a display by applying a driving signal corresponding to the third code value to a pixel.

A recording medium according to an embodiment may be a computer-readable recording medium having recorded thereon a program for allowing a computer to perform an operation method of an electronic device including an operation of obtaining a first code value by converting an input code value.

In an embodiment, the recording medium may be a computer-readable recording medium having recorded thereon a program for allowing the computer to perform the operation method of the electronic device including an operation of obtaining a second code value by dithering the input code value.

In an embodiment, the recording medium may be a computer-readable recording medium having recorded thereon a program for allowing the computer to perform the operation method of an electronic device including an operation of obtaining a third code value based on the first code value and the second code value.

In an embodiment, the recording medium may be a computer-readable recording medium having recorded thereon a program for allowing the computer to perform the operation method of the electronic device including an operation of driving a display by applying a driving signal corresponding to the third code value to a pixel.

Throughout the present disclosure, the expression "at least one of a, b or c" indicates only a, only b, only c, both a and b, both a and c, both b and c, all of a, b, and c, or variations thereof.

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein.

The terms used herein are those general terms currently used in the art in consideration of functions in the present disclosure, but the terms may vary according to the intentions of those of ordinary skill in the art, precedents, or new technology in the art. Thus, the terms used herein should be understood not as simple names but based on the meanings of the terms and the overall description of the present disclosure.

Also, the terms used herein are only used to describe particular embodiments and are not intended to limit the present disclosure.

Throughout the present disclosure, when an element is referred to as being "connected" to another element, it may be "directly connected" to the other element or may be "electrically connected" to the other element with one or more intervening elements therebetween.

As used herein particularly in the claims, "the" or the like may refer to both the singular and the plural. Also, when there is no description explicitly specifying the order of operations described in a method according to the present disclosure, the described operations may be performed in a suitable order. The scope of the present disclosure is not limited to the described operation order.

Phrases such as "in some embodiments" or "in an embodiment" appearing in various places in the specification do not necessarily all refer to the same embodiment.

Some embodiments of the present disclosure may be represented by functional blocks and various processing operations. Some or all of these functional blocks may be implemented by any number of hardware and/or software components that execute particular functions. For example, the functional blocks of the present disclosure may be implemented by one or more microprocessors or may be implemented by circuit components for a certain function. Also, for example, the functional blocks of the present disclosure may be implemented in various programming or scripting languages. The functional blocks may be implemented as an algorithm executed in one or more processors. Also, the present disclosure may employ the related art for electronic environment setting, signal processing, and/or data processing. Terms such as "mechanism," "element," "unit," and "component" may be widely used and are not limited to mechanical and physical components.

Also, the connection lines or connection members between the elements illustrated in the drawings are merely examples of functional connections and/or physical or logical connections. In an actual device, the connections between elements may be represented by various functional connections, physical connections, or logical connections that are replaceable or added.

Also, as used herein, the terms such as "units" and "modules" may refer to units that perform at least one function or operation, and the units may be implemented as hardware or software or a combination of hardware and software.

In an embodiment, the term "user" may include a producer, a manufacturer, or a tester of an electronic device, a manager or installer who controls the function or operation of the electronic device, or a general viewer using the electronic device. Hereinafter, the present disclosure will be described in detail with reference to the accompanying drawings.

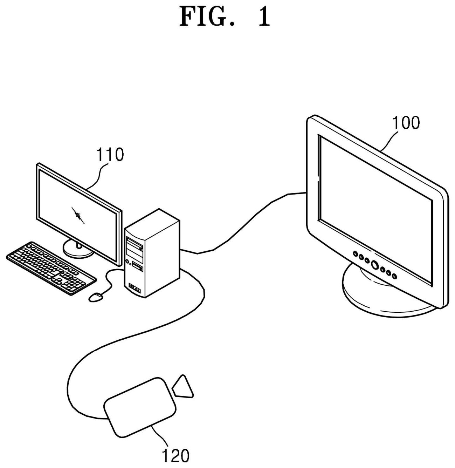

FIG. 1 illustrates a method of adjusting the deviation of each pixel by using a measurement camera.

In FIG. 1, a display device 100 may be an electronic device that outputs images through a screen. The screen included in the display device 100 may include a panel or may be a large screen in the form of a multi-vision system including a plurality of panels.

In FIG. 1, a control device 110 may control the display device 100 and may be implemented as various devices such as a personal computer (PC), a server computer, a laptop computer, and a portable electronic device. The control device 110 may be connected to the display device 100 through a wired or wireless communication network to transmit/receive signals to/from the display device 100.

The panel included in the display device 100 may be one of various panels including a light emitting element such as a liquid crystal display (LCD), a light emitting diode (LED), an organic light emitting diode (OLED), or a cold cathode fluorescent lamp (CCFL).

For example, it is assumed that the display device 100 includes an LED panel. An LED as a type of light emitting element may be a semiconductor light emitting element that converts electrical energy into light energy. The LED panel may be a current-driven element and its luminance may vary depending on the intensity of the current.

The LED panel may be implemented by using a micro LED (µLED). The micro LED may be an ultra-small LED having a size of 5 micrometers (µm) to 100 µm, about one-tenth the length and one-hundredth the area of a general LED chip. Compared to a general LED, the micro LED may have a higher response time, may support lower power consumption and higher brightness, and may be less likely to break when bent when applied to a display.

A light emitting element such as a micro LED may vary in brightness and color depending on its individual characteristics. Also, when an LED display device including a micro LED is a large screen including a plurality of panels, such as a video wall, because each panel has a unique brightness and color, a luminance and color deviation may occur in each panel from the viewpoint of one display.

Thus, in an LED display device including a micro LED, it may be important to ensure a uniform brightness and color throughout the entire screen.

When a large screen includes a plurality of modules or panels including micro LEDs, it may be important to ensure a uniform brightness and color throughout the entire screen. This may require a process of correcting the brightness or color deviation between pixels in the module and correcting the brightness or color deviation between modules.

By using the brightness or color output by the display device 100, the control device 110 may determine whether the brightness or color output by the display device 100 has a desired value.

In FIG. 1, the display device 100 and the control device 110 are illustrated as separate entities; however, this is merely an example and the display device 100 and the control device 110 may be implemented in an integrated form.

The control device 110 may control the display device 100 to output optical information from the display device 100. The control device 110 may transmit an input code value to the display device 100 to cause the display device 100 to output optical information corresponding to the input code value.

Under control by the control device 110, the display device 100 may output an image quality measurement image for facilitating brightness or chromaticity measurement.

The control device 110 may be connected to a camera 120 through wired or wireless communication. In FIG. 1, the camera 120 and the control device 110 are illustrated as separate entities; however, this is merely an example and the camera 120 and the control device 110 may be implemented in an integrated form. For example, the camera 120 and the control device 110 may be a single, integrated, and specialized measurement device.

The camera 120 may generate an image by photographing a subject and signal-process the image. The camera 120 may obtain an image by photographing the entirety or a portion of the display device 100 including one or more panels. The camera 120 may project information about the subject onto an image sensor such as CCD or CMOS, and the image sensor may convert the light received through the camera 120 into an electrical signal. Also, the camera 120 may perform signal processing on the obtained image, such as one or more of auto exposure (AE), auto white balance (AWB), color recovery, correction, sharpening, gamma, and lens shading correction.

The camera 120 may photograph the display device 100 to obtain optical information output by the display device 100, for example, an image quality measurement image. The camera 120 may transmit the image quality measurement image to the control device 110.

The control device 110 may measure at least one of brightness and chromaticity by analyzing the image quality measurement image received from the camera 120.

When the measured value is different from a desired value, the control device 110 may change the input code value and apply the changed input code value to the display device 100. The display device 100 may output optical information corresponding to the changed input code value. The control device 110 may continuously adjust the input code value until the measured value obtained through the camera 120 becomes the desired value.

For example, the control device 110 may transmit an input code value for brightness measurement to the display device 100. The display device 100 may output an image quality measurement image with a certain luminance corresponding to the input code value. The control device 110 may measure the output brightness of the display device 100 by analyzing the image obtained through the camera 120. The control device 110 may determine whether the measured brightness is a desired brightness, and when the measured brightness is not the desired brightness, the control device 110 may again retrieve an input code value for causing the measured brightness to be equal to the desired brightness.

Similarly, the control device 110 may transmit an input code value for chromaticity measurement to the display device 100. The display device 100 may output an image quality measurement image with a certain color corresponding to the input code value. The control device 110 may measure the chromaticity by analyzing the image obtained through the camera 120. When the measured chromaticity is not a desired chromaticity, the control device 110 may modify the input code value to output the desired chromaticity. The control device 110 may continue to modify the input code value until the display device 100 outputs the desired brightness.

Alternatively, the control device 110 may transmit, to the display device 100, an input code value for measuring both brightness and chromaticity. The control device 110 may measure chromaticity and brightness together from an image output by the display device 100 and modify the input code value such that the measured chromaticity and the measured brightness become the desired chromaticity and the desired brightness.

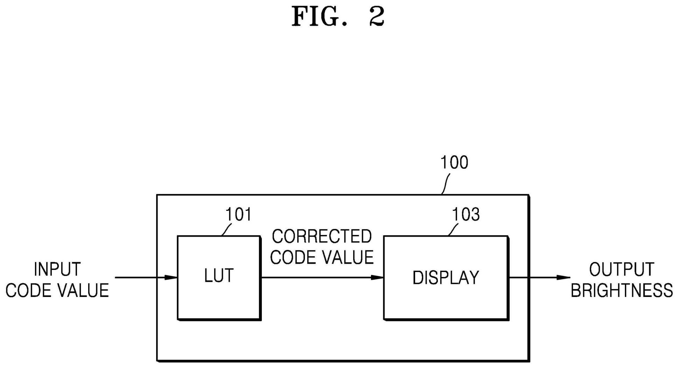

FIG. 2 is a block diagram of the display device 100.

Referring to FIG. 2, the display device 100 may include a look-up table (LUT) 101 and a display 103.

The display 103 may include a panel or may include a plurality of panels.

The display 103 may be a flat display, a curved display with a curvature, or a flexible display with an adjustable curvature. The output resolution of the display 103 may be, for example, High Definition (HD), Full HD, Ultra HD, 8K Ultra HD, or resolution higher than 8K Ultra HD.

The display device 100 may convert a code by using the LUT 101.

As described above with reference to FIG. 1, the manufacturer may use the control device 110, the display device 100, and the camera 120 to check how much the input code value input to the display device 100 should be corrected to output a desired value from the display device 100. The manufacturer may measure the brightness or chromaticity from the optical information output by the display device 100 and obtain a corrected code value for each input code value. The manufacturer may generate an LUT 101 for converting the input code value into a corrected code value and store the same in the display device 100.

Thereafter, the display device 100 may convert the input code value into a corrected code value by using the LUT 101 when outputting an image. The display device 100 may apply a driving signal corresponding to the corrected code value obtained by using the LUT 101 to the display 103 such that the display 103 may output a desired brightness.

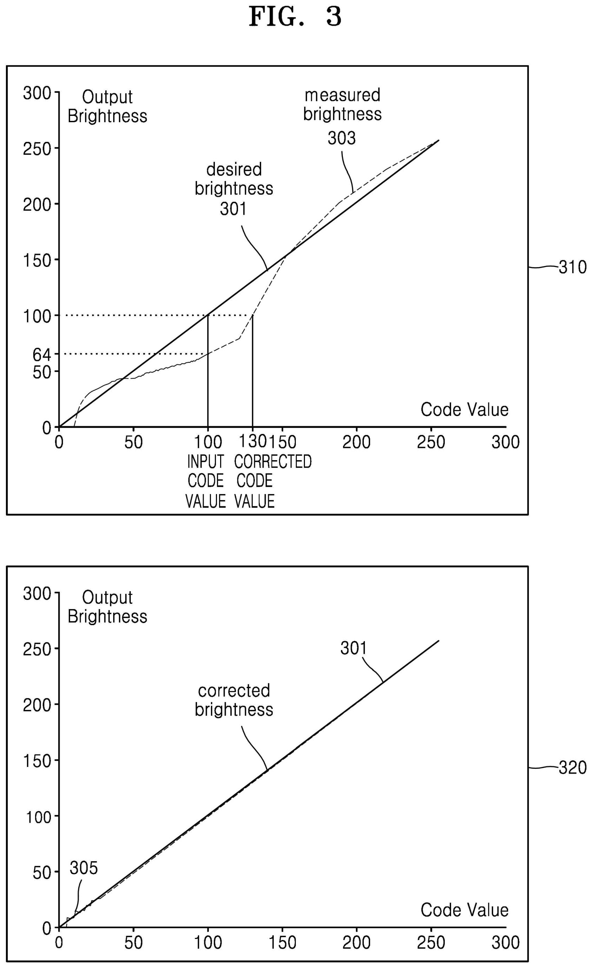

FIG. 3 illustrates the relationship between an input code value and a corrected code value.

Reference numeral 310 of FIG. 3 is a graph for comparing, with a desired brightness, the brightness output from the display 103 when a driving signal corresponding to the input code value is applied to the display 103.

The horizontal axis of graphs 310 and 320 of FIG. 3 represents the code value, and the vertical axis thereof represents the output brightness.

For convenience of description, the code value and the output brightness of the graph are illustrated as having values within the same range. Also, in an ideal case, the code value and the desired brightness are represented as having the same value. This may mean that the code value and the desired brightness are ideally represented as a linear graph with a slope of 1.

Also, for convenience of description, a case where the input code value is an input code value about brightness and accordingly the display device 100 outputs an image quality measurement image of a certain luminance/brightness will be described; however, the present disclosure is not limited thereto, and the input code value may be an input code value about chromaticity or may be an input code value considering both brightness and chromaticity.

Referring to reference numeral 310 of FIG. 3, a first graph 301 among two graphs represents the desired brightness according to the code value, and a second graph 303 represents the actually measured brightness according to the code value.

According to the first graph 301, when the input code value is 100, the desired brightness value that the display 103 should output according to the driving signal corresponding to the input code value "100" should be 100. However, as illustrated in the second graph 303, when the input code value is 100, the actually measured brightness is only 64. In order to correct the measured brightness to the desired brightness, it may be necessary to use the code value "130" corresponding to the measured brightness "100" as a corrected code value for the input code value "100".

As such, the manufacturer may obtain the corrected code values for all input code values and obtain the relationship between the input code value and the corrected code value by using a look-up table, a gain value, or the like. For example, when the input code value "100" is input, the manufacturer may generate an LUT 101 for converting the input code value "100" into the corrected code value "130". The manufacturer may generate the LUT 101 and store the same in the memory or storage in the display device 100.

Thereafter, when the user views an image by using the display device 100 of FIG. 2, the LUT 101 included in the display device 100 may convert an input code value "100" for an image to be output into a corrected code value "130" and apply a driving signal corresponding to the corrected code value "130" to the display 103 such that the display 103 may output an output brightness of 100.

Reference numeral 320 of FIG. 3 illustrates the comparison of two graphs respectively representing the desired brightness and the corrected brightness. Referring to reference numeral 320, it may be seen that a first graph 301 representing the desired brightness according to the code value and a third graph 305 representing the corrected brightness according to the corrected code value are nearly equal to each other above a certain grayscale. That is, above a certain grayscale, it may be seen that the corrected brightness is corrected to the desired brightness through a correction method based on brightness measurement.

On the other hand, it may be seen that there is an error between the first graph 301 and the third graph 305 at low grayscale. The error between the first graph 301 and the third graph 305 may mean that the corrected brightness is different from the desired brightness at low grayscale. In other words, it may be seen that correction may not be properly performed at low grayscale by using the correction method through luminance or brightness measurement alone, that is, by using only the LUT 101.

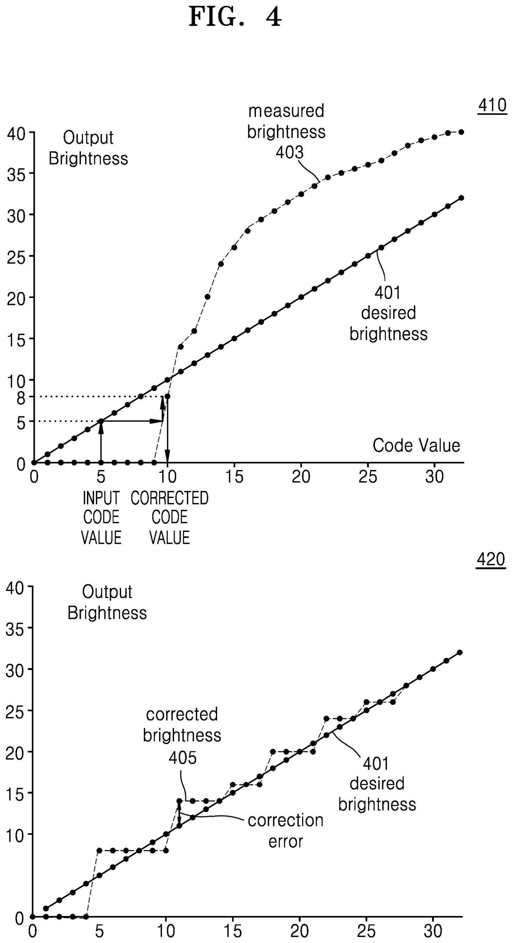

FIG. 4 illustrates output brightness depending on input code value at low grayscale.

Reference numerals 410 and 420 of FIG. 4 respectively represent graphs in which only a low grayscale portion in the graphs 310 and 320 at which the code value is 32 or less is enlarged.

A point on the graph of FIG. 4 represents the brightness (luminance) at each code value.

Among the two graphs of reference numeral 410 of FIG. 4, a first graph 410 represents the desired brightness according to the code value, and a second graph 420 represents the actually measured brightness according to the code value.

Generally, a display should have the linearity in which the luminance also increases proportionally as the input code value increases. However, actually, the linearity may be significantly reduced at dark low grayscale in most displays.

Referring to reference numeral 410, ideally, as the code value increases, the output brightness should increase proportionally as illustrated in a first graph 401. However, actually, as illustrated in a second graph 403, the linearity between the code value and the measured brightness is poor at low grayscale. Also, in the second graph 420, the measured brightness according to the code value is 0 for all code values up to code value 9.

However, the second graph 420 illustrated in FIG. 4 illustrates the brightness characteristics of a certain display, and the relationship between the code value and brightness at low grayscale is not limited to the form of the second graph 420 of FIG. 4 and may be represented in various nonlinear graph forms.

A case where a corrected code value when the input code value is 5 is obtained in the graph of FIG. 4 by using the correction method described above with reference to FIGS. 1 and 2 will be described.

In FIG. 4, when the input code value is 5, the desired brightness according to the first graph 401 becomes 5. However, it may be seen that there is no code value corresponding to the brightness of 5 in the second graph 403. In this case, the measured brightness "8" having the smallest difference from the desired brightness "5" among the measured brightnesses may be selected, and a code value "10" when the measured brightness is 8 may become a corrected code value. Consequently, when a code value "5" is input, the LUT 101 of FIG. 2 may correct the input code value "5" to a corrected code value "10" and apply a driving signal corresponding to the corrected code value "10" to the display 103. In this case, the display 103 may output a brightness of 8, not a desired brightness "5".

In this case, the relationship between the input code and the output brightness may not be accurately corrected. Thus, the uniformity of brightness may not be secured at low grayscale.

Reference numeral 420 of FIG. 4 represents a graph illustrating the corrected brightness at low grayscale. In reference numeral 420, the first graph 401 represents the desired brightness according to the input code value at low grayscale. A third graph 405 represents the measured brightness obtained by measuring the brightness output from the display 103 when a driving signal corresponding to the corrected code value is applied to the display 103.

Comparing the first graph 401 and the third graph 405, it may be seen that the third graph 405 does not have the linearity like the first graph 401 but has a step-like shape. Also, it may be seen that the height and length of the step in the third graph 405 increase as the grayscale decreases. This may indicate that the correction error between the desired brightness and the corrected brightness increases as the grayscale decreases. A great correction error may mean that it is difficult to secure a uniform brightness.

Also, referring to the third graph 405, it may be seen that there is a case where the measured brightnesses corresponding to different input code values have the same value. In other words, at low grayscale, there may be many code values having the same brightness in spite of different input code values. This may mean that image details are not properly represented at low grayscale.

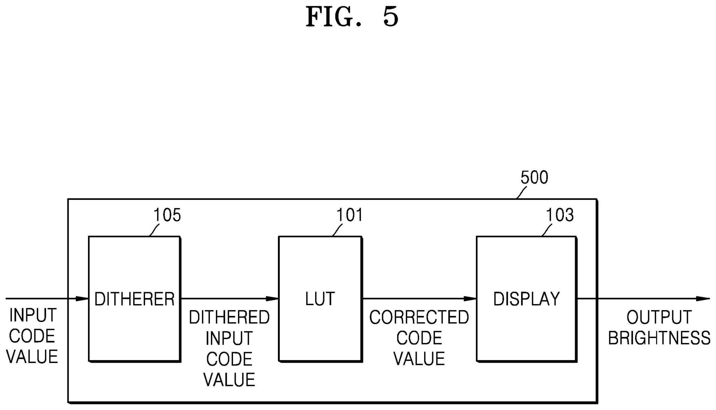

FIG. 5 illustrates a case where a dithering technique is used to solve a correction error at low grayscale, according to an embodiment.

Referring to FIG. 5, a display device 500 according to an embodiment may further include a ditherer 105 in addition to the LUT 101 and the display 103.

In an embodiment, the display device 500 may form a dithering pattern by using the ditherer 105.

The dithering technique may refer to a technique for representing a desired brightness or chromaticity by using limited code values.

In an embodiment, the ditherer 105 may represent an additional grayscale by using a limited grayscale by using the dithering technique. In an embodiment, by combining a reference code value and 0, the ditherer 105 may form a dithering pattern that is a combination of 0 and the reference code value.

The reference code value may be one of the code values that are easily corrected. Herein, the code value that is easily corrected may refer to a code value at which the output brightness has linearity when the code value is input. For example, the reference code value may be a code value with the smallest value among the input codes that ensure the linearity between the input code and the output brightness.

In an embodiment, the ditherer 105 may form a dithering pattern for each unit area by dithering the input code values of pixels in a unit area. The unit area may refer to an area in which dithering is performed to form a dithering pattern, and the size of the unit area may vary.

FIG. 5 illustrates a case where the ditherer 105 is located before the LUT 101 for converting the code value. In this case, the display device 500 may dither the input code value by using the ditherer 105 and correct the dithering result by using the LUT 101.

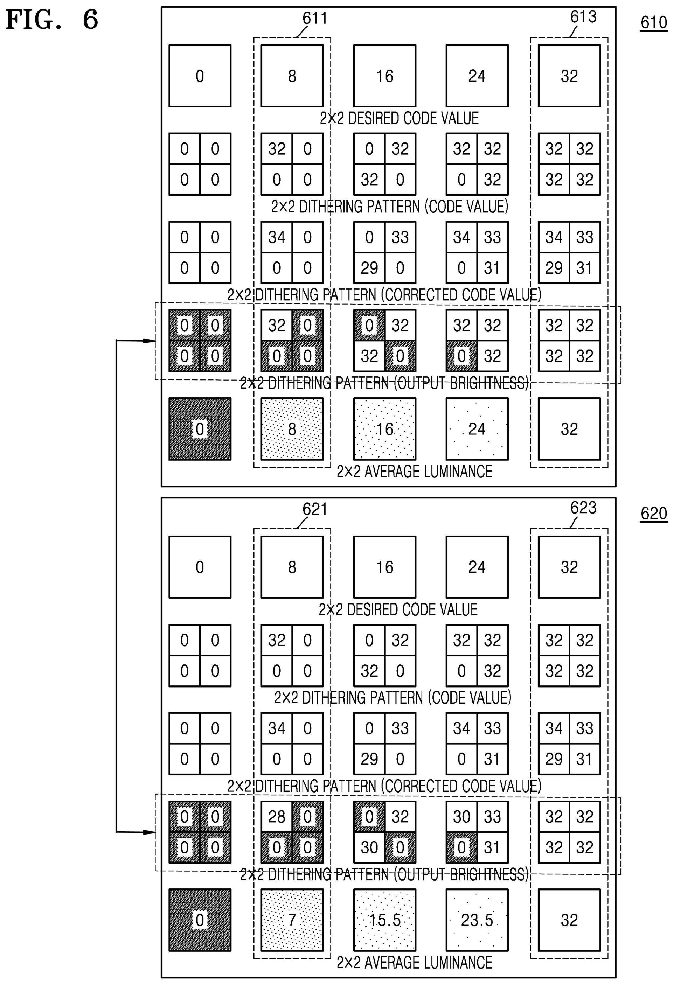

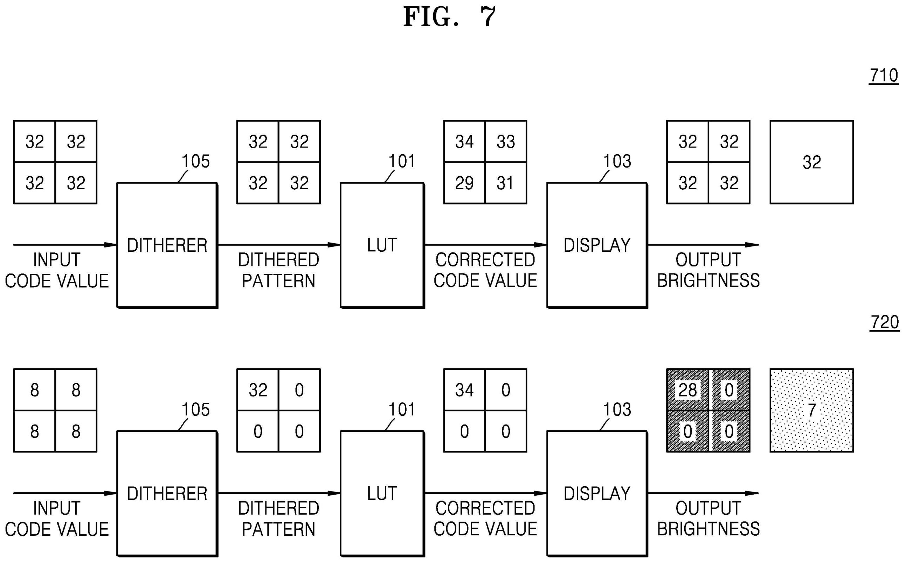

Hereinafter, a method by which the display device 500 solves a correction error at low grayscale by using a dithering pattern will be described with reference to FIGS. 6 and 7.

FIG. 6 illustrates dithering patterns depending on input code values.

For example, FIG. 6 illustrates a case where a unit area includes four pixels with a size of 2×2. However, this is merely an embodiment, and the unit area may have various sizes such as 3×3, 4×4, and 8×8.

The input code value and the corresponding brightness characteristics will be described with reference to reference numeral 610 of FIG. 6.

Five unit areas according to a desired code value are illustrated in a first row of reference numeral 610. It is assumed that the unit areas illustrated in FIG. 6 are the same as each other. For example, the unit areas including four pixels included in the first row may be the same as each other with only different desired code values.

In FIG. 6, different desired code values are represented in the unit areas included in the first row. That is, from left to right in the first row, the desired code values of the respective unit areas may be 0, 8, 16, 24, and 32.

Herein, the desired code may be used in the same meaning as the input code. Also, herein, the desired code and the desired brightness are used as having the same value. For example, a desired code value "8" in a second unit area of the first row may refer to an input code value for causing an output brightness in the unit area to be 8.

A second row of reference numeral 610 of FIG. 6 represents a dithering pattern generated by the ditherer 105 based on the desired code value. In FIGS. 5 and 6, it is assumed that the reference code value is 32. The ditherer 105 of FIG. 5 may generate a dithering pattern by combining 0 and the reference code value 32 such that the average code value of the pixels included in the unit area becomes the desired code value.

The dithered input code value generated by the ditherer 105 of FIG. 5 may be converted into a corrected code value by the LUT 101. A third row of reference numeral 610 of FIG. 6 represents a corrected code value for each pixel included in the dithering pattern.

A fourth row of reference numeral 610 of FIG. 6 represents the output brightness output from the display 103 when a driving signal corresponding to the corrected code value is applied to the display 103.

A fifth row of reference numeral 610 of FIG. 6 represents the average brightness recognized by the human eye when the display 103 outputs the brightness as illustrated in the fourth row. For example, when the display 103 outputs a brightness of 32, 0, 0, 0 as illustrated in a second unit area of the fifth row, the human eye may recognize the brightness of the unit area as 8 that is the average value of the output brightness of each pixel included in the unit area.

In an deal case, when a driving signal corresponding to the corrected code corrected by the LUT 101 is applied to a pixel, the pixel should output a uniform brightness. That is, as represented in the third row of reference numeral 610, when a corrected code value corrected by the LUT 101 has a non-zero value in a pixel among the pixels in the unit area, the output brightness in the pixel should be 32 as represented in the fourth row.

However, actually, depending on the characteristics of the display 103, when a code value to which dithering has been applied is corrected by the LUT 101, the output brightness corresponding to the corrected code value may differ from the desired brightness. This phenomenon may occur particularly when the desired code is smaller than the reference code value.

Reference numeral 620 illustrates a case where the output brightness corresponding to the corrected code value varies depending on the characteristics of the display 103.

The first to third rows of reference numeral 620 may have the same values as the first to third rows of reference numeral 610. However, referring to the fourth row of reference numeral 620, when the desired code is less than a reference code value "32", the output brightness output by the display 103 may be different from the output brightness represented in the fourth row of reference numeral 610, depending on the characteristics of the display 103.

For example, comparing reference numerals 611 and 621, when a unit area with a desired code of 8 is processed, the output brightness corresponding to the corrected code value output from the upper left pixel among the four pixels included in a reference area should be 32 in an ideal case; however, actually, depending on the characteristics of the pixel, the output brightness output from the same upper left pixel may be 28. When the output brightness of the pixels included in a 2×2 unit area is 28, 0, 0, 0, the average luminance of the four pixels is 7, which may mean that the human eye recognizes the brightness of the area as 7.

On the other hand, comparing reference numerals 613 and 623 of FIG. 6, when a unit area with a desired code of 32 is processed, the output brightness corresponding to the corrected code value "34" output from the upper left pixel among the four pixels included in the reference area may be equal to a desired code "32".

That is, even when a driving signal corresponding to the same corrected code value "34" is applied to the same pixel, for example, the upper left pixel among the four pixels included in the reference area, when the desired code is 8 and 32, the brightnesses output by that same pixel may be different from each other as 28 and 32 respectively.

The brightness may be affected by the current and resistance. When only one of four pixels included in the reference area emits light and when all of the four pixels emits light, because even the same pixel is affected by the light emission of another pixel, the optical information output by the pixel may vary.

As such, in the display 103, when the dithering result is corrected, the brightness corresponding to the corrected code may be different from the desired brightness. Also, it may be seen that this phenomenon occurs when the desired code is smaller than the reference code value.

FIG. 7 is a diagram particularly comparing and describing a method by which the display device 500 of FIG. 5 processes unit areas of reference numerals 621 and 623 of FIG. 6.

Reference numeral 710 of FIG. 7 illustrates that the display device 500 processes a unit area with a desired code of 32, which is denoted by reference numeral 623 of FIG. 6.

The ditherer 105 may generate a dithering pattern by dithering pixels included in the unit area based on the desired code value. The ditherer 105 may generate a dithering pattern by using 0 and a reference code value "32".

At reference numeral 710 of FIG. 7, the ditherer 105 may generate a dithering pattern with a code value of 32, 32, 32, 32 to generate a desired code value "32".

The ditherer 105 may transmit the dithering pattern to the LUT 101. The LUT 101 may receive the dithering pattern from the ditherer 105 and correct the code value of each pixel included in the dithering pattern to a corrected code value. That is, the LUT 101 may convert the code value of each pixel included in the dithering pattern into a corrected code value for causing the output brightness in each pixel to be a desired code value "32".

As illustrated in reference numeral 710 of FIG. 7, the LUT 101 may convert a dithered pattern of 32, 32, 32, 32 into a corrected code value of 34, 33, 29, 31. This may mean that the input code value 32, 32, 32, 32 for each of the four pixels included in the unit area should be converted into the corrected code value of 34, 33, 29, 31 to output the brightness of 32 in each pixel corresponding to the converted corrected code value.

The display device 500 may generate a driving signal corresponding to the corrected code value corrected by the LUT 101 and apply the driving signal to each pixel of the display 103. Each pixel of the display 103 may output optical information according to the driving signal. As illustrated in reference numeral 710 of FIG. 7, the display 103 may output brightnesses of 32, 32, 32, and 32 from four pixels included in a reference area, respectively. In this case, the user may recognize the brightness of the reference area as 32 that is the average value of the four pixels.

The light emitting elements included in the display 103 may often have different characteristics for various reasons. Depending on the display 103, when the dithering pattern is converted into a corrected code value by the LUT 101, there may be a case of the occurrence of a phenomenon in which the brightness output from the pixel in response to the corrected code value is different from the desired brightness. In particular, this phenomenon may occur when the desired code is smaller than the reference code value, such as 8 or 24.

Reference numeral 720 of FIG. 7 illustrates that the display device 500 processes a unit area with a desired code of 8, which is denoted by reference numeral 623 of FIG. 6.

The ditherer 105 may generate a dithering pattern by dithering the pixels included in the unit area. By using 0 and a reference code value, the ditherer 105 may generate a dithering pattern for generating a desired code value "8". For example, as illustrated in 720 of FIG. 7, the ditherer 105 may generate a dithering pattern with a code value of 32, 0, 0, 0 to generate a desired code value "8".

The ditherer 105 may transmit the dithering pattern to the LUT 101. The LUT 101 may correct the code value of each pixel included in the dithering pattern included in the dithering pattern received from the ditherer 105. The LUT 101 may convert the code value 32, 0, 0, 0 of the dithered pattern into a corrected code value of 34, 0, 0, 0. This may mean that the input code value of 32, 0, 0, 0 should be converted into the corrected code value of 34, 0, 0, 0 such that the average value of the brightness output from the pixel corresponding to the converted corrected code value is 8.

The display device 500 may generate a driving signal corresponding to the corrected code value corrected by the LUT 101 and apply the driving signal to each pixel of the display 103. Each pixel of the display 103 may output optical information according to the driving signal.

Reference numeral 720 of FIG. 7 illustrates that the display 103 outputs a brightness of 28, 0, 0, 0 in response to a corrected code of 34, 0, 0, 0. That is, among the pixels included in a 2×2 unit area, as illustrated in reference numeral 710, the upper left pixel may also output a brightness of 32 when the peripheral pixels output a brightness of 32, and the upper left pixel may also output a brightness that is lower than 32 when the peripheral pixels are dark, for example, when the brightness is 0. In this case, the output brightness of the pixels included in a 2×2 unit area may be 28, 0, 0, 0, and thus, the average luminance of the four pixels may be 7 and the user may recognize the brightness of the unit area as 7.

As such, when the desired code value is smaller than the reference code value, the brightness output from the pixel in response to the corrected code value generated from the dithering pattern may be different from the desired brightness, depending on the characteristics of a pixel included in the display 103 or a light emitting element included in the pixel.

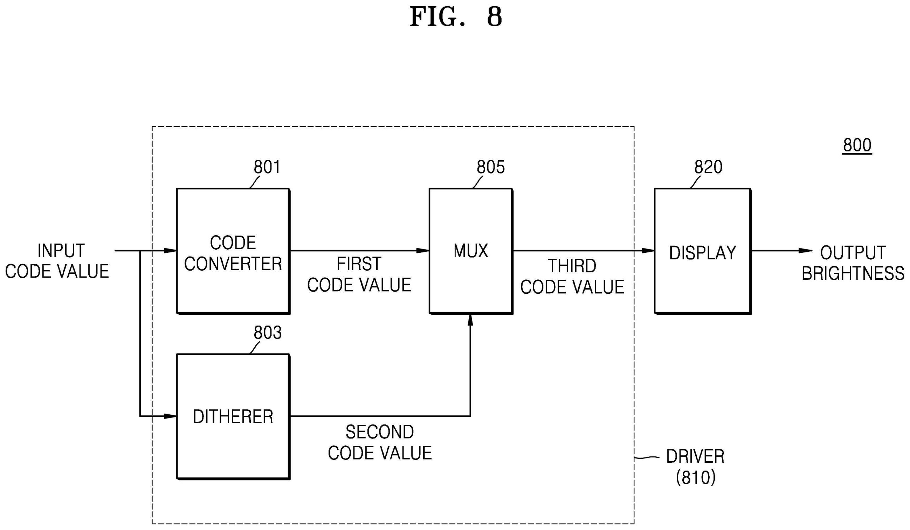

FIG. 8 illustrates an electronic device 800 according to an embodiment.

Referring to FIG. 8, the electronic device 800 may include a driver 810 and a display 820.

In an embodiment, the electronic device 800 may be a display device capable of outputting an image. For example, the electronic device 800 may be implemented as various types of electronic devices including a display. The electronic device 800 may be a fixed type or a mobile type and may be a digital TV capable of receiving digital broadcasting but is not limited thereto.

In an embodiment, the electronic device 800 may include at least one of a desktop computer, a smartphone, a tablet personal computer (PC), a mobile phone, a video phone, an e-book reader, a laptop PC, a netbook computer, a digital camera, a personal digital assistant (PDA), a portable multimedia player (PMP), a camcorder, a navigation device, a wearable device, a smart watch, a home network system, a security system, and a medical device.

The electronic device 800 may be implemented not only as a flat display device but also as a curved display device having a screen with curvature or a flexible display device having adjustable curvature. The output resolution of the electronic device 800 may include, for example, various resolutions such as High Definition (HD), Full HD, Ultra HD, or resolution higher than Ultra HD.

In an embodiment, the display 820 may be a panel including a LED light emitter or may be a large screen including a plurality of panels. Alternatively, the display 820 may be a module included in a panel. The module may include a plurality of elements arranged in a matrix configuration. Each module may include a micro LED light emitting element. Each pixel may include three light emitting elements, that is, a red LED element, a green LED element, and a blue LED element.

In an embodiment, the display 820 may be installed as a single unit in a wearable device, a portable device, a handheld device, and an electronic product or electrical equipment requiring various displays. Alternatively, in an embodiment, the display 820 may be applied to a display device such as a monitor for a personal computer (PC), a high-resolution TV, a signage, or an electronic display through a plurality of assembly arrangements in a matrix type.

In an embodiment, the electronic device 800 may output content through the display 820. In an embodiment, the electronic device 800 may process an image signal corresponding to the content and output the processed image signal through the display 820.

In an embodiment, when transmitting an image signal to the display 820, the driver 810 of the electronic device 800 may modify an input code value corresponding to the image signal such that a driving signal corresponding to the modified code value may be input to the display 820.

In an embodiment, the driver 810 may include a code converter 801, a ditherer 803, and a multiplexer (MUX) 805.

In an embodiment, the ditherer 803 may obtain a dithering pattern by dithering the input code value. In an embodiment, the ditherer 803 may generate a dithering pattern representing a desired brightness or chromaticity by combining limited code values. In an embodiment, the ditherer 105 may dither the input code value by using a combination of 0 and a reference code value.

In an embodiment, the reference code value may be one of the code values that are easily corrected. Herein, the code value that is easily corrected may refer to a code value at which the output brightness has linearity when the code value is input.

In an embodiment, the reference code value may be a code value with the smallest value among the input codes that ensure the linearity between the input code and the output brightness.

In an embodiment, by dithering an input code value for a unit area, the ditherer 105 may form a dithering pattern such that the average code value of the unit area is equal to the input code value.

In an embodiment, the ditherer 803 may form a dithering pattern for the pixels included in a certain unit area. In an embodiment, the size of the unit area for which the ditherer 803 forms a dithering pattern may have various values.

As the size of the unit area to which dithering is applied increases, a greater number of grayscales may be represented. For example, when the size of the unit area to which dithering is applied is 2×2, up to four code values, that is, 0, 8, 16, and 24, may be represented. When the unit area is 4×4, 16 code values may be represented. When the unit area is extended to 8×8, up to 64 code values may be represented.

As described above with reference to FIGS. 2 and 4, when outputting an image by using the display device 100 according to FIG. 2, it may be difficult to secure a uniform brightness at low grayscale because the correction error between the desired brightness and the corrected brightness is great.

In an embodiment, a dithering technique may be used to solve the correction error at low grayscale. In an embodiment, the ditherer 803 may obtain a dithering pattern with one of 0 and a reference code value by dithering input code values corresponding to pixels in a unit area. In an embodiment, the ditherer 803 may generate various brightnesses by using the dithering pattern.

For example, in FIG. 4, when the input code value is 5, because a code value corresponding to a brightness of 5 is not in the second graph 403, the display 103 outputs a brightness of 8, not a desired brightness of 5.

However, in the case of the electronic device 800 of FIG. 8, the ditherer 803 may generate a dithering pattern in which the average brightness of a reference area becomes 5, by combining 0 and a reference code value. That is, by using the dithering pattern, the ditherer 803 may generate a brightness that the electronic device 800 may not actually represent. Thus, in the case of the electronic device 800 of FIG. 8, the brightness output in response to the code value may have the linearity closer to the first graph 401 rather than a step-like shape like the third graph 405 of FIG. 4.

Herein, the code value according to the dithering pattern generated by the ditherer 803 will be referred to as a second code value.

In an embodiment, the code converter 801 may receive an input code value and correct the input code value.

The code converter 801 of FIG. 8 may correspond to the LUT 101 of FIG. 2.

In an embodiment, the code converter 801 may convert an input code value by using a correction matrix. In an embodiment, the correction matrix may be, for example, in the form of a look-up table or a gain value. The gain value may be a particular constant value or a mathematical expression.

The correction matrix may be a set of input code values and corrected code values corresponding to the input code values. The correction matrix may be generated in advance by the manufacturer, as described above with reference to FIG. 1 or FIG. 2.

The manufacturer may measure the brightness value of the optical information output by the display 820 and obtain, as a corrected code value, a code value when the desired brightness value is measured. The manufacturer may generate a correction matrix for converting an input code value into a corrected code value and prestore the same in a storage (not illustrated) in the electronic device 800.

In an embodiment, the storage may store a correction matrix for each pixel or for each LED element included in the pixel. In an embodiment, the correction matrix may include at least one of a correction matrix for brightness correction, a correction matrix for color correction, and a correction matrix for simultaneously correcting brightness and color.

The electronic device 800 according to an embodiment may include the code converter 801 and the ditherer 803 in parallel. Thus, according to an embodiment, the code converter 801 may not receive an input of a pattern dithered by the ditherer 803 but may directly receive an input of an input code value and correct the input code value by using a correction matrix.

As mentioned above in the description of the display device 500 of FIG. 5, when the input code value is dithered by using the ditherer 105 and the dithering result is corrected by using the LUT 101, even when a driving signal corresponding to the corrected code value corrected by the LUT 101 is applied to the same pixel, the brightness output by the same pixel may be different from the desired brightness, depending on the display, depending on the desired code value.

Also, when the dithering result is used as the input of the LUT 101 as in FIG. 5, the LUT 101 may correct only 0 and the reference code value included in the dithering pattern, thus failing to correct the code value in more detail.

Thus, in an embodiment, instead of the LUT 101 being located after the ditherer 803 like the display device 500 of FIG. 5 to receive the dithered pattern from the ditherer 803, the code converter 801 may be located in parallel to the ditherer 803 to receive the input code value independently of the ditherer 803 and correct the received input code value.

Hereinafter, the corrected code value obtained by the code converter 801 by correcting the input code value will be referred to as a first code value. In an embodiment, the correction matrix may convert the input code value into the first code value.

The first code value may be a code value that causes at least one of a target brightness and a target color to be output from a pixel when a driving signal corresponding to the first code value is applied to the pixel. For example, when the pixel includes three LED light emitting elements, the first code value may be a code value that causes a particular light emitting element included in a particular pixel, for example, a RED light emitting element, to output the target brightness.

In an embodiment, the MUX 805 may obtain the first code value from the code converter 801 and the second code value from the ditherer 803. In an embodiment, the MUX 805 may obtain a third code value based on the first code value and the second code value.

In an embodiment, the MUX 805 may be a type of multiplexer switch. In an embodiment, the MUX 805 may select one of the first code value and the second code value for each pixel.

In an embodiment, the MUX 805 may select the second code value "0" as the third code value for a pixel of which the second code value is 0. In an embodiment, the MUX 805 may select the first code value as the third code value for a pixel of which the second code value is not 0.

In an embodiment, the display 820 may include a plurality of pixels. Each pixel may include three light emitting elements, that is, a red LED element, a green LED element, and a blue LED element.

In an embodiment, the driver 810 may apply a driving signal corresponding to one of the three light emitting elements included in each pixel to cause the light emitting element to emit light. The driving signal may include at least one of a driving voltage and a driving current.

In an embodiment, the driver 810 may obtain a first code value and a second code value for each light emitting element and obtain a third code value based on the first code value and the second code value.

In an embodiment, the driver 810 may obtain a driving signal corresponding to the third code value and apply the driving signal to a light emitting element to cause the light emitting element to output at least one of the desired brightness or the target chromaticity.

As such, according to an embodiment, by using the dithering pattern, the electronic device 800 according to the present disclosure may represent various brightness values that the electronic device 800 may not actually represent.

Also, according to an embodiment, the electronic device 800 according to the present disclosure may accurately correct the input code value according to the characteristics of the light emitting element for each pixel by using the code converter 801. Thus, even when the input code value is lower than the reference code value, the output brightness corresponding to the input code value may be equal to the desired brightness.

Also, according to an embodiment, by using the code converter 801 and the ditherer 803 in parallel, the electronic device 800 according to the present disclosure may measure an accurate desired brightness while solving the correction error at low grayscale by considering both the dithering pattern and the code value converted by the code converter 801.

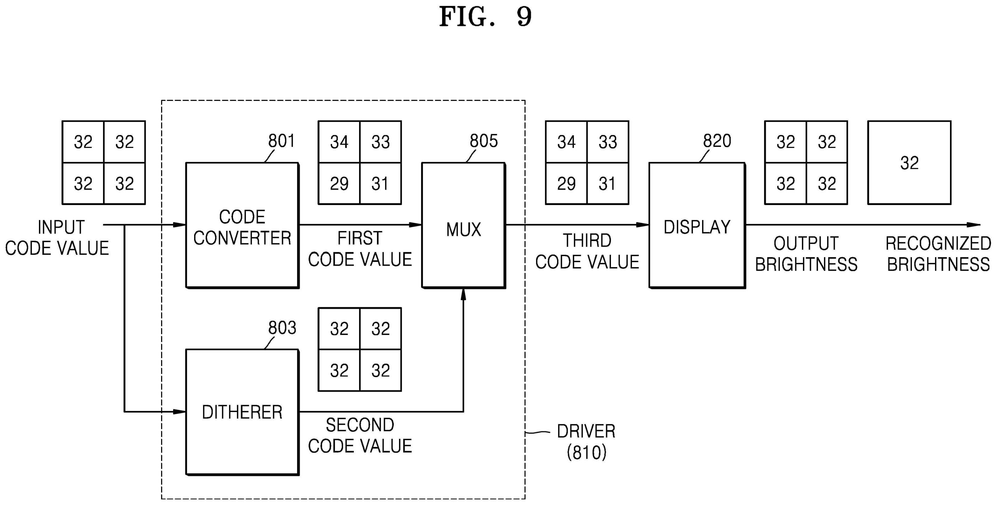

FIGS. 9 to 11 are diagrams for describing the electronic device 800 according to an embodiment outputs a desired brightness when various desired code values are given.

FIG. 9 illustrates the electronic device 800 according to an embodiment outputting a desired brightness when a desired code value is 32.

In FIG. 9, the size of the unit area may be 2×2. Herein, the desired code value may be equal to the input code value. Thus, in FIG. 9, the input code value may be 32 that is equal to the desired code value.

In an embodiment, the code converter 801 may convert input code values 32, 32, 32, and 32 into first code values 34, 33, 29, and 31 respectively. In an embodiment, the code converter 801 may convert the input code value into the first code value by using a correction matrix prestored in the storage or the like. As described above, the correction matrix may be pre-generated by the manufacturer of the electronic device 800 and stored in the electronic device 800.

In an embodiment, the code converter 801 may transmit the first code value to the MUX 805.

In an embodiment, a ditherer 830 may form a dithering pattern by dithering the input code value for the unit area. In an embodiment, the ditherer 803 may form a dithering pattern by using a combination of 0 and a reference code.

In an embodiment, the ditherer 830 may obtain 32, 32, 32, and 32 as the dithering pattern, that is, the second code value, by dithering the input code values 32, 32, 32, and 32 for the unit area.

In an embodiment, the ditherer 803 may transmit the second code value to the MUX 805.

In an embodiment, the MUX 805 may obtain a third code value based on the first code value and the second code value. In an embodiment, the MUX 805 may select one of the first code value and the second code value as a third code value.

In an embodiment, the MUX 805 may select 0 as the third code value for a pixel of which the second code value is 0. In an embodiment, the MUX 805 may select the first code value as the third code value for a pixel of which the second code value is not 0.

In FIG. 9, because there is no pixel with a second code value of 0, the MUX 805 may select the first code value as the third code value.

In an embodiment, the driver 810 may obtain a driving signal corresponding to the third code value and apply the driving signal to a pixel included in the display 820 to drive the display 820.

In an embodiment, the display 820 may output a brightness of 32, 32, 32, and 32 in response to the application of the driving signal corresponding to the third code. In an embodiment, the brightness output by the display 820 may have an average value of 32 and thus may be recognized as a brightness of 32 by the user's eyes.

As such, according to an embodiment, when the second code value obtained by the ditherer 803 does not include 0, the second code value may not affect the selection of the third code value.

FIG. 9 illustrates a case where the driver 810 obtains the third code value regardless of whether the input code value is less than or equal to the reference code value; however, the present disclosure is not limited thereto, and in an embodiment, the driver 810 may first determine whether the input code value is less than or equal to the reference code value. That is, in an embodiment, the driver 810 may compare the input code value with the reference code value and cause the ditherer 803 to operate only when the input code value is less than or equal to the reference code value or when the input code value is less than the reference code value.

For example, in the above example, by comparing the input code value with the reference code value, the driver 810 may control the ditherer 803 not to operate when the input code value is equal to the reference code value of 32. In this case, the driver 810 may transmit, to the MUX 805, the first code value obtained by using the code converter 801.

When receiving the first code value from the code converter 801, the MUX 805 may select the first code value as the third code value. The driver 810 may obtain a driving signal corresponding to the third code value and apply the driving signal to a pixel included in the display 820 to drive the display 820.

Alternatively, the driver 810 may control both the ditherer 803 and the MUX 805 not to operate when the input code value is greater than or equal to the reference code value. In this case, by comparing the input code value with the reference code value, the driver 810 may control the ditherer 803 and the MUX 805 not to operate because the input code value is equal to the reference code value of 32. The driver 810 may drive the display 820 by applying a driving signal corresponding to the first code value obtained by using the code converter 801 to the pixel included in the display 820.

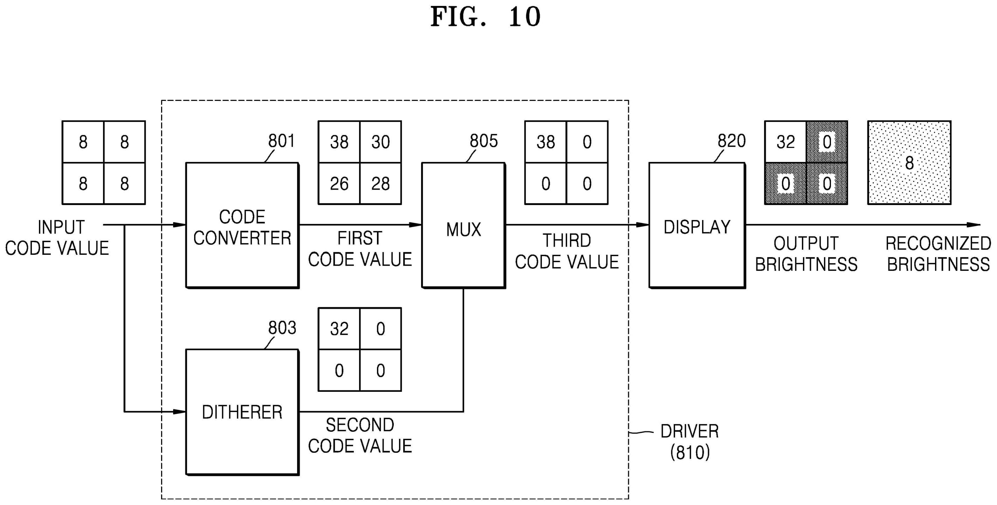

FIG. 10 illustrates the electronic device 800 according to an embodiment outputting a desired brightness when a desired code value is 8.

In FIG. 10, the size of the unit area may be 2×2.

In an embodiment, by using the prestored correction matrix, the code converter 801 may convert input code values 8, 8, 8, and 8 into first code values 38, 30, 26, and 28 respectively. In an embodiment, the code converter 801 may transmit the first code value to the MUX 805.

In an embodiment, the ditherer 803 may form a dithering pattern by using a combination of 0 and a reference code. In an embodiment, by using 0 and the reference code value 32, the ditherer 803 may generate a dithering pattern in which the average value of the unit area is a desired code value of 8.

As illustrated in FIG. 10, in an embodiment, the ditherer 803 may generate a dithering pattern, that is, a second code value 32, 0, 0, 0, 0, by dithering an input code values 8, 8, 8, 8 for the unit area.

However, this is merely an embodiment, and the ditherer 803 may generate a dithering pattern in various forms. For example, the ditherer 803 may generate a second code value as 0, 32, 0, 0, or as 0, 0, 32, 0, or as 0, 0, 0, 32.

In an embodiment, the ditherer 803 may transmit the second code value to the MUX 805.

In an embodiment, the MUX 805 may obtain a third code value based on the first code value and the second code value. In an embodiment, the MUX 805 may select one of the first code value and the second code value as a third code value.

In an embodiment, the MUX 805 may select 0 as the third code value for a pixel of which the second code value is 0. In an embodiment, the MUX 805 may select the first code value as the third code value for a pixel of which the second code value is not 0.

In an embodiment, the MUX 805 may select the first code value as the third code value for a pixel of which the second code value is 0, that is, the upper right pixel, the lower right pixel, or the lower left pixel among the pixels included in the unit area.

In an embodiment, the MUX 805 may select the first code value as the third code value for the upper left pixel of which the second code value is not 0.

In an embodiment, the driver 810 may obtain a driving signal corresponding to the third code value selected by the MUX 805 and apply the driving signal to a light emitting element included in the display 820 to drive the display 820.

In an embodiment, the display 820 may output a brightness of 32, 0, 0, and 32 in response to the application of the driving signal corresponding to the third code. In this case, in an embodiment, the brightness output by the display 820 may be an average value of 8, and the user may recognize the brightness of the unit area as a luminance of 8 that is a desired brightness value.

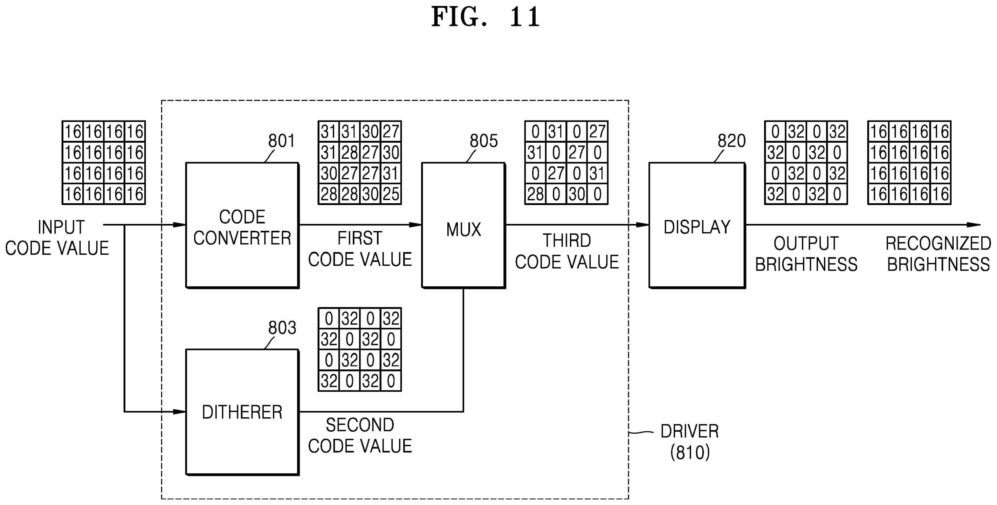

FIG. 11 illustrates the electronic device 800 according to an embodiment outputting a desired brightness when a desired code value is 16.

FIG. 11 illustrates a case where the size of the unit area is 4×4.

In an embodiment, the code converter 801 may convert each of 16 input code values into the first code value by using a prestored correction matrix. That is, the code converter 801 may convert 16 pixel-by-pixel input code values 16, 16, 16, 16, 16, 16, 16, 16, 16, 16, 16, 16, 16, 16, 16, 16, 16, 16, 16, and 16 into first code values 31, 31, 30, 27, 31, 28, 27, 30, 30, 27, 27, 31, 28, 28, 30, and 25 respectively. In an embodiment, the code converter 801 may transmit the 16 first code values for the unit area to the MUX 805.

In an embodiment, the ditherer 803 may dither the input code value for the unit area to form a dithering pattern, that is, a second code value, by using a combination of 0 and the reference code value. In an embodiment, the ditherer 803 may dither the input code values for each of 16 pixels to generate a dithering pattern by using a combination of 0 and 32. For example, as illustrated in FIG. 11, in an embodiment, the ditherer 803 may dither the input code value for the unit area to generate a dithering pattern as 0, 32, 0, 32, 32, 0, 32, 0, 0, 32, 32, 0, 32, and 0.

However, this is merely an embodiment, and the ditherer 803 may generate a dithering pattern in various forms. For example, the ditherer 803 may generate the second code value as 0, 32, 0, 32, 0, 32, 0, 32, 0, 32, 0, 32, 0, 32, 0, 32, 0, and 32 or as 0, 0, 0, 0, 0, 0, 0, 0, 0, 32, 32, 32, 32, 32, 32, 32, and 32.

In an embodiment, the ditherer 803 may transmit the second code value to the MUX 805.

In an embodiment, the MUX 805 may obtain a third code value based on the first code value and the second code value. In an embodiment, the MUX 805 may select one of the first code value and the second code value as a third code value.

In an embodiment, the MUX 805 may select 0 as the third code value for the pixel of which the second code value is 0 and may select the first code value as the third code value for the pixel of which the second code value is not 0.

In an embodiment, the MUX 805 may select 0, 31, 0, 27, 31, 0, 27, 0, 0, 27, 0, 31, 28, 0, 30, and 0 as the third code value for 16 pixels.

In an embodiment, the driver 810 may obtain a driving signal corresponding to the third code value and apply the driving signal to a pixel included in the display 820 to drive the display 820.

In an embodiment, the display 820 may output a brightness of 0, 32, 0, 32, 32, 0, 32, 0, 0, 32, 0, 32, and 0 from each pixel in response to the application of the driving signal corresponding to the third code. In an embodiment, the brightness output by the display 820 may have an average value of 16 and thus may be recognized as a luminance of a desired brightness value of 16 by the user's eyes.

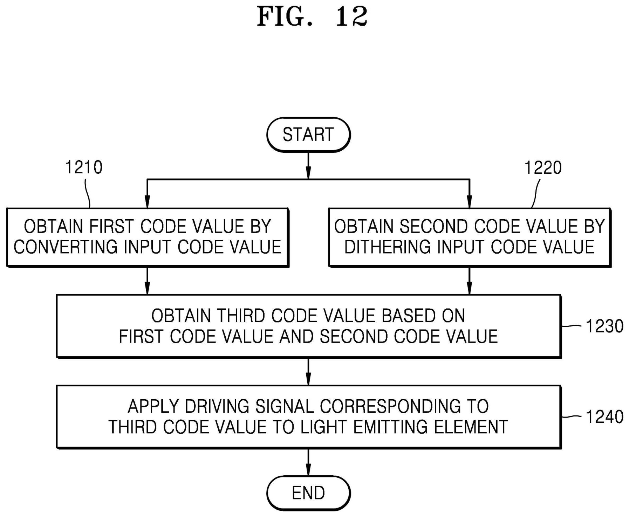

FIG. 12 is a flowchart illustrating an operation method of the electronic device 800 according to an embodiment.

Referring to FIG. 12, in an embodiment, the electronic device 800 may obtain a first code value by converting an input code value (operation 1210).

In the embodiment, the electronic device 800 may obtain the first code value from the input code value by using various forms of correction matrixes such as a look-up table (LUT) or a gain value in a numerical or mathematical form.

In the embodiment, the electronic device 800 may obtain a second code value by dithering the input code value (operation 1220).

In an embodiment, the electronic device 800 may obtain the second code value by forming a dithering pattern by using a combination of 0 and a reference code.

In an embodiment, the electronic device 800 may obtain a third code value based on the first code value and the second code value (operation 1230).

In an embodiment, the electronic device 800 may obtain a third code value by selecting one of the first code value and the second code value.

In an embodiment, the electronic device 800 may select 0 as the third code value for the pixel of which the second code value is 0 and may select the first code value as the third code value for the pixel of which the second code value is not 0.

In an embodiment, the electronic device 800 may apply a driving signal corresponding to the third code value to the light emitting element (operation 1240).

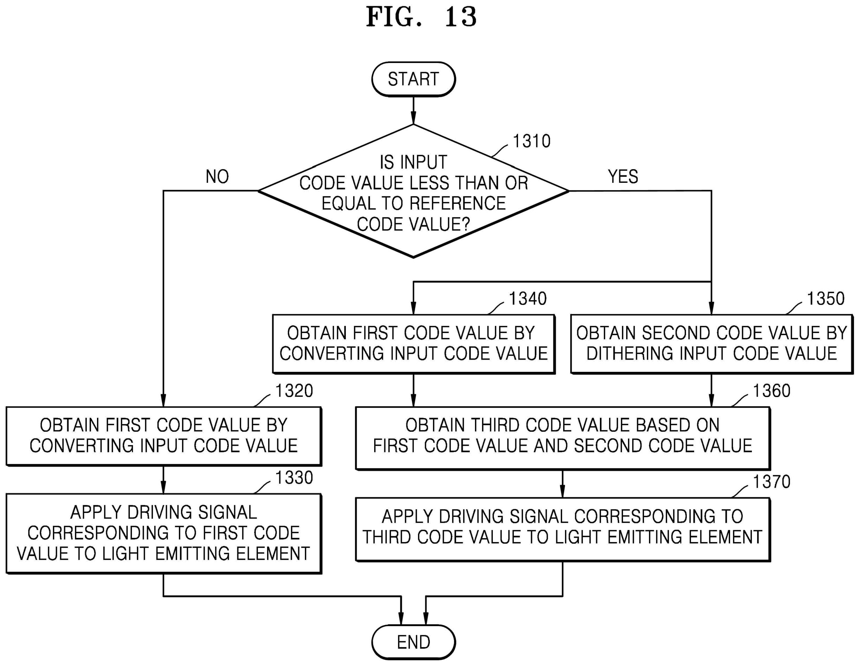

FIG. 13 is a flowchart illustrating an operation method of the electronic device 800 according to an embodiment.

Referring to FIG. 13, in an embodiment, the electronic device 800 may determine whether an input code value is less than or equal to a reference code value (operation 1310). According to an embodiment, at high grayscale where an input code value has linearity, the electronic device 800 may generate a driving signal by using only a first code value.

Thus, in an embodiment, the electronic device 800 may not perform an operation of obtaining a second code value or a third code value when the input code value is greater than the reference code value. When the input code value is greater than the reference code value, the electronic device 800 may deactivate the ditherer 803 or deactivate the ditherer 803 and the MUX 805.

In an embodiment, when the input code value is not less than or equal to the reference code value, that is, when the input code value is greater than the reference code value, the electronic device 800 may obtain the first code value by converting the input code value (operation 1320).

In an embodiment, the electronic device 800 may apply a driving signal corresponding to the first code value to the light emitting element (operation 1330).

In an embodiment, when the input code value is less than or equal to the reference code value (operation 1310), the electronic device 800 may obtain a first code value by converting the input code value (operation 1340) and obtain a second code value by dithering the input code value (operation 1350).

The electronic device 800 may obtain a third code value based on the first code value and the second code value (operation 1360). In an embodiment, the electronic device 800 may apply a driving signal corresponding to the third code value to the light emitting element (operation 1370).

As such, according to an embodiment, the electronic device 800 may smoothly correct the correction error at low grayscale by obtaining a third code value by using not only the first code value but also the second code value at low grayscale where the linearity between the input code value and the output brightness is poor and generating a driving signal based on the third code value.

The electronic device and the operating method thereof according to some embodiments may also be implemented in the form of a computer-readable recording medium including instructions executable by a computer, such as program modules executed by a computer. The computer-readable recording mediums may be any available mediums accessible by computers and may include both volatile and non-volatile mediums and detachable and non-detachable mediums. Also, the computer-readable recording mediums may include both computer storage mediums and communication mediums. The computer storage mediums may include both volatile and non-volatile and detachable and non-detachable mediums implemented by any method or technology for storage of information such as computer-readable instructions, data structures, program modules, or other data. For example, the communication mediums may include any information transmission mediums and may include other transmission mechanisms or other data of modulated data signals such as computer-readable instructions, data structures, program modules, or carriers.

Also, an electronic device and an operation method of the electronic device according to an embodiment of the present disclosure described above may be implemented as a computer program product including a computer-readable recording medium/storage medium having recorded thereon a program for implementing the operation method of the electronic including an operation of obtaining a first code value by converting an input code value, an operation of obtaining a second code value by dithering the input code value, an operation of obtaining a third code value based on the first code value and the second code value, and an operation of driving a display by applying a driving signal corresponding to the third code value to a pixel.

A machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment, the method according to various embodiments described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

## Claims

1. An electronic device (800) comprising:
a display (820) comprising a plurality of pixels; and
a driver (810),
wherein the driver is configured to
obtain a first code value by converting an input code value,
obtain a second code value by dithering the input code value,
obtain a third code value based on the first code value and the second code value, and
drive the display by applying a driving signal corresponding to the third code value to a pixel.

2. The electronic device of claim 1, further comprising a storage storing a correction matrix,
wherein the driver is configured to obtain the first code value by converting the input code value by using the correction matrix.

3. The electronic device of claim 2, wherein the correction matrix is used to convert the input code value into the first code value corresponding to a driving signal for causing, when applied to a light emitting element included in the pixel, at least one of brightness and color of an output signal output from the light emitting element, to have a target value.

4. The electronic device of any one of claims 1 to 3, wherein the driver is configured to, by dithering input code values of pixels in a unit area including the pixel by using a combination of 0 and a reference code value, obtain one of 0 and the reference code value as the second code value.

5. The electronic device of any one of claims 1 to 4, wherein the driver is configured to obtain the third code value by selecting one of the first code value and the second code value by using a multiplexer (MUX) switch.

6. The electronic device of claim 5, wherein the driver is configured to select 0 as the third code value with respect to a pixel of which the second code value is 0.

7. The electronic device of claim 5, wherein the driver is configured to select the first code value as the third code value with respect to a pixel of which the second code value is the reference code value.

8. The electronic device of any one of claims 1 to 7, wherein the driver is configured to apply the driving signal to one of a plurality of light emitting elements included in the pixel.

9. The electronic device of claim 1, wherein the driver is configured to obtain the second code value only when the input code value is less than or equal to a reference code value.

10. The electronic device of claim 9, wherein the driver is configured to apply a driving signal corresponding to the first code value to the pixel when the input code value is greater than the reference code value.

11. An operation method of an electronic device, the operation method comprising:
obtaining a first code value by converting an input code value;
obtaining a second code value by dithering the input code value;
obtaining a third code value based on the first code value and the second code value; and
driving a display by applying a driving signal corresponding to the third code value to a pixel.

12. The operation method of claim 11, wherein the obtaining of the first code value comprises obtaining the first code value by converting the input code value by using a correction matrix.

13. The operation method of claim 12, wherein the correction matrix is used to convert the input code value into the first code value corresponding to a driving signal for causing, when applied to the pixel, the pixel to output at least one of a target brightness and a target color.

14. The operation method of any one of claims 11 to 13, wherein the obtaining of the second code value comprises obtaining one of 0 and a reference code value as the second code value by dithering input code values corresponding to pixels in a unit area.

15. A computer-readable recording medium having stored thereon a program for executing the operation method of the electronic device of any one of claims 11 to 14.
